# EUROPÄISCHE PATENTANMELDUNG

(11) **EP 1 770 115 A1**
(43) Veröffentlichungstag der Anmeldung: **04.04.2007**
(21) Anmeldenummer: 05021416.2
(22) Anmeldetag: 30.09.2005
(51) Int. Cl.: C08J 5/04, C08J 5/18, B29C 70/00

(54) **Faserverstärktes flächiges Halbzeug**

(71) Anmelder: Quadrant Plastic Composites AG, 5600 Lenzburg (CH)
(72) Erfinder: Zingraff, Joelle, 8006 Zürich (CH)
(74) Vertreter: Felder, Peter

(57) **Zusammenfassung**

Die Erfindung betrifft ein Verfahren zur Herstellung eines faserverstärkten, thermoplastisch verarbeitbaren, flächigen Halbzeugs durch Vermischen eines Nanopartikel enthaltenden thermoplastischen Kunststoffs mit Verstärkungsfasern und Heissverpressen der Mischung zum Halbzeug.

## Beschreibung

Die Erfindung betrifft ein Verfahren zur Herstellung eines faserverstärkten, thermoplastisch verarbeitbaren, flächigen Halbzeugs, bei dem man ein thermoplastisches Polymer mit Verstärkungsfasem vermischt und heiss verpresst.

Faserverstärkte, thermoplastisch verarbeitbare, flächige Halbzeuge werden in zunehmendem Masse zur Herstellung von Fertigteilen, z.B. für den Automobilbau eingesetzt.

Die gebräuchlichsten Halbzeuge sind glasmattenverstärkte Thermoplasten, sogenannte GMT-Halbzeuge. Sie werden hergestellt durch gemeinsames Verpressen einer Thermoplast-Schmelze mit Glasfasermatten, z.B. in einem Kalander oder einer Doppelbandpresse.

Eine Alternative sind langfaserverstärkte Thermoplasten, sogenannte LFT-Halbzeuge. Zu ihrer Herstellung wird Thermoplast-Granulat in einem Extruder aufgeschmolzen, in den gleichzeitig Endlosglasfasern eingezogen werden, die durch die Scherwirkung der Extruderschnecken gebrochen werden. Aus einer Breitschlitzdüse wird dann ein Fasern enthaltendes Schmelzeband ausgepresst, das zum Halbzeug abgekühlt wird.

Neuerdings werden auch genadelte Mischfaservliese aus Thermoplastfasem und Verstärkungsfasem eingesetzt, die ebenfalls in einem Kalander oder einer Doppelbandpresse zum Halbzeug verpresst werden.

Schliesslich ist auch ein Nass-Verfahren bekannt, bei dem eine wässrige Dispersion eines Thermoplastpulvers mit Verstärkungsfasem vermischt, getrocknet und zum Halbzeug heiss verpresst wird.

Derartige Halbzeuge haben den Vorteil, dass sie gelagert und erst bei Bedarf durch Heissverpressen in Formen oder durch Tiefziehen zu Fertigteilen umgeformt werden können. Diese Fertigteile weisen zwar gute mechanische und thermische Eigenschaften auf, die aber für manche Anwendungszwecke, insbesondere im Hochleistungsbereich, noch unbefriedigend sind.

Der Erfindung lag daher die Aufgabe zugrunde, die Eigenschaften von faserverstärkten, thermoplastisch verarbeitbaren, flächigen Halbzeugen zu verbessern.

Es wurde gefunden, dass diese Aufgabe gelöst wird, wenn man ein Nano-Composite aus 99 bis 80 Gew.-% eines Thermoplasten und 1 bis 20 Gew.-% Nanopartikel mit Verstärkungsfasern vermischt und die Mischung heiss verpresst. Dies war überraschend, da nicht abzusehen war, welchen Effekt die Zugabe von Nanopartikeln in ein nichtkonsolidiertes, d.h. mit Hohlräumen durchsetztes, thermoplastisch verarbeitbares flächiges Halbzeug haben würde.

Nanopartikel an sich sind seit einigen Jahren bekannt. Es handelt sich dabei um kleinste Partikel in Form von Plättchen, Nadeln oder Röhrchen im Grössenbereich von Nanometem. Nano-Composites sind z.B. in dem Artikel von Lilli Manolis Sherman "Nanocomposites - A Little goes a Long Way" in Plastics Tochnology, June 1999, beschrieben. Es sind Mischungen aus thermoplastischen Kunststoffen und Nanopartikeln, die entweder durch Einarbeiten von Nanopartikeln in eine Thermoplastschmelze oder durch Polymerisation von Monomeren in Gegenwart von Nanopartikeln hergestellt werden. Der besagte Artikel beschreibt die direkte Verarbeitung der Nano-Composites durch Spritzgiessen oder Blasformen zu Formkörpern; es ist jedoch weder von einer Herstellung von Halbzeugen noch von Faserverstärkung die Rede.

Dies ist auch bei der WO 00/37243 nicht der Fall. Dort sind thermoplastische Automobilteile mit angeformten Verbindungsstiften beschrieben, welche mit Nanopartikeln verstärkt sind.

Die WO 03/033567 beschreibt ein Verfahren zur Herstellung eine polymeren Nano-Composites, welches Graphit enthält. Zwar ist darin die Verwendung von Verstärkungsfasern als Möglichkeit erwähnt; das Verfahren betrifft allerdings nicht die Herstellung von thermoplastisch verarbeitbaren flächigen Halbzeugen. Vielmehr geht es dort um die Verbesserung der Eigenschaften von starren Fertigteilen aus Kunststoff.

Bei der vorliegenden Erfindung werden als Nanopartikel vorzugsweise Schichtsilikate, z.B. Plättchen auf Basis von Ton ("nano clay"), insbesondere Montmorillonit eingesetzt. Zu deren Herstellung wird natürlicher Ton in Plättchen aufgespalten ("exfoliated"). Diese haben mittlere Durchmesser in der Grössenordung von 50 bis 1500 nm und mittlere Dicken von 0,5 bis 10 nm. Von Bedeutung ist dabei, dass der Durchmesser der Plättchen kleiner ist als der Durchmesser der Verstärkungsfasern, insbesondere kleiner als der halbe Durchmesser. Da die Plättchen hydrophil sind, werden sie z.B. mit organischen Ammonium-Kationen oberflächlich behandelt, ehe sie in Thermoplasten eingearbeitet werden können. Nanopartikel auf Basis von Montmorillonit sind im Handel erhältlich, sie werden z.B. von der Firma Nanocor angeboten. Auch 40- bis 60-%ige Konzentrate - sogenannte "Masterbatches" - von Montmorillonit in Polypropylen sind verfügbar, z.B. von den Firmen Polyone, Dolder, Clariant und Dow Corning.

Zur Herstellung der Nano-Composites werden 1 bis 20, vorzugsweise 2 bis 10 Gew.-% Nanopartikel in einem Extruder mit 99 bis 80, vorzugsweise mit 98 bis 90 Gew.-% eines thermoplastischen Kunststoffs vermischt und die Mischung wird granuliert.

Alternativ wird ein Masterbatch zu 5 bis 20 Gew.-% gemeinsam mit einem thermoplastischen Kunststoff und Additiven wie Stabilisatoren und Farbpigmenten extrudiert und anschliessend zusammen mit Glasmatten laminiert.

Alternativ wird ein Masterbatch zu 5 bis 20 Gew.-% gemeinsam mit einem thermoplastischen Kunststoff und gegebenenfalls Additiven wie Stabilisatoren und Farbpigmenten extrudiert und granuliert.

Grundsätzlich ist es auch möglich, die Mischung aus thermoplatischem Kunststoff und Nanopartikeln in einem Extruder mit Breitschlitzdüse herzustellen und das flächige Extrudat dann direkt - unter Einsparung des Granulierschritts - nach dem unten beschriebenen GMT-Verfahren zum Halbzeug zu laminieren.

Als thermoplastische Kunststoffe kommen praktisch alle thermoplastisch verarbeitbaren Polymeren in Frage, z.B.: Polyolefine, wie Polypropylen und Polyethylen; Polyamide, wie Polyamid 6 und Polyamid 66; sowie verhältnismässig niedrig schmelzende Polyester, wie Polybutylenterephthalat und Copolyester.

Bevorzugte Verstärkungsfasem sind Glasfasern, Kohlenstofffasern, Basaltfasern und Polyethylenterephthalatfasern, sowie Naturfasern. Auch Hybridfasem, z.B. aus Glasfasern und Polypropylenfasem sowie Kern/Schale-Mischfasem kommen in Frage.

Beim Vermischen des Nano-Composites mit den Verstärkungsfasem setzt man vorzugsweise auf 10 bis 80 Gew.-% Nano-Composite 90 bis 20 Gew.-% Verstärkungsfasern ein. Das Heissverpressen der Mischung zum Halbzeug wird bei Temperaturen oberhalb des Erweichungspunktes des Thermoplasten durchgeführt, vorzugsweise 10 bis 70 °C oberhalb.

Die Nano-Composites können nach verschiedenen Verfahren mit den Verstärkungsfasem vermischt und zum Halbzeug verpresst werden:

### 1. GMT-Verfahren

Eine Schmelze des Nano-Composites oder eine daraus hergestellte Folie wird mit einem,textilen Flächengebilde aus Verstärkungsfasern, vorzugsweise einer genadelten Matte oder auch einem unidirektionalen Gelege oder einem Gewebe zusammengeführt und mit diesen verpresst. Dies kann diskontinuierlich in Plattenpressen, vorzugsweise aber kontinuierlich in Kalandern oder Doppelbandpressen vorgenommen werden. Dabei werden vorzugsweise auf 20 bis 60 Gew.-% Nano-Composite 80 bis 40 Gew.-% Verstärkungsfasern eingesetzt. Nach dem Abkühlen wird ein flächiges Halbzeug erhalten.

### 2. LFT-VerFahren

In einem Doppelschneckenextruder wird Nano-Composite-Granulat aufgeschmolzen. Gleichzeitig werden in den Extruder Endlos-Verstärkungsfasem eingezogen, die durch die Scherwirkung der Extruderschnecken gebrochen und mit der Schmelze vermischt werden. Die Mischung wird durch eine Breitschlitzdüse zu einem flächigen Halbzeug-Band ausgepresst. Dieses kann abgekühlt, aufgerollt und gelagert oder direkt zugeschnitten und zu Fertigteilen verpresst werden.

### 3. Trocken-Verfahren

Aus dem Nano-Composite werden in üblichen Spinndüsen Fasern gesponnen. Diese werden auf Längen von vorzugsweise 3 bis 12 cm geschnitten und mit Verstärkungsfasem von etwa der gleichen Länge, z.B nach dem Krempel- oder Airlay-Verfahren kontinuierlich vermischt, wobei ein als endloses Band vorliegendes Mischvlies mit einem Flächengewicht von vorzugsweise 200 bis 2000 g/m² entsteht. Dieses wird vorzugsweise durch Nadeln verfestigt, erwärmt und z.B. in einem Kalander oder einer Doppelbandpresse verpresst und abgekühlt. Das abgekühlte Halbzeug kann je nach Pressdruck Luftporen in Mengen von 0 bis 75 Vol.-% enthalten.

### 4. Nass-Verfahren

Nano-Composite-Granulat wird zu Pulver, vorzugsweise mit einer Teilchengrösse von 0,1 bis 2 mm zermahlen; dieses wird in Wasser dispergiert, die Dispersion wird mit Verstärkungsfasem einer Länge von 0,5 bis 15 mm vermischt. Die feuchte Mischung wird durch Abpressen und Trocknen vom Wasser befreit und zum Halbzeug heiss verpresst.

Bei der Halbzeugherstellung können Funktionsschichten, z.B. Dekorfolien, Textilbahnen, Faservliese oder Verstärkungsmaterialien, wie z.B. mit Thermoplasten getränkte Gewebe oder Gelege, mitverpresst werden.

Ein weiterer Gegenstand der Erfindung ist ein thermoplastisch verarbeitbares, flächiges Halbzeug, enthaltend:
- 99 bis 80 Gew.-Teile eines thermoplastischen Kunststoffs,
- 1 bis 20 Gew.-Teile Nanopartikel und
- 20 bis 800 Gew.-Teile Verstärkungsfasern.

Das erfindungsgemässe Halbzeug kann durch Umformen in Pressformen oder durch Tiefziehen bei Temperaturen oberhalb des Erweichungspunktes des Thermoplasten zu Fertigteilen verarbeitet werden, beispielsweise für die Automobilindustrie, die Möbelindustrie oder das Bauwesen.

Die Fertigteile zeichnen sich gegenüber herkömmlichen faserverstärkten Teilen durch verbesserte mechanische Eigenschaften, wie z.B. Zugfestigkeit, Elastizitätsmodul und Kriecheigenschaften, durch höhere Temperaturbeständigkeit, eine gleichmässigere Oberflächenstruktur und bessere Verklebbarkeit aus.

## Patentansprüche

1. Verfahren zur Herstellung eines faserverstärkten, thermoplastisch verarbeitbaren, flächigen Halbzeugs, wobei man ein thermoplastisches Polymer mit Verstärkungsfasem vermischt und zum Halbzeug heiss verpresst, **dadurch gekennzeichnet, dass** das thermoplastische Polymer ein Nano-Composite aus 80 bis 99 Gew.-% eines thermoplastischen Kunststoffs und 1 bis 20 Gew.-% Nanopartikel ist.

2. Verfahren nach Anspruch 1, **dadurch gekennzeichnet, dass** man 10 bis 80 Gew.-% des Nano-Composite mit 90 bis 20 Gew.-% Verstärkungsfasern vermischt.

3. Verfahren nach Anspruch 1, **dadurch gekennzeichnet, dass** man das Heissverpressen bei einer Temperatur oberhalb des Erweichungspunktes des thermoplastischen Kunststoffs vornimmt.

4. Verfahren nach Anspruch 1, **dadurch gekennzeichnet, dass** man das Nano-Composite aufschmilzt und direkt als Schmelze oder als daraus hergestellte Folie mit flächigen Verstärkungsfaser-Matten, -Gelegen oder -Geweben zusammenführt und zu einem GMT-Halbzeug heiss verpresst.

5. Verfahren nach Anspruch 1, **dadurch gekennzeichnet, dass** man das Nano-Composite aufschmilzt, die Schmelze in einem Extruder mit Endlos-Verstärkungsfasern zusammenführt, wobei die Fasern gebrochen werden, und zu einem LFT-Halbzeug-Band auspresst.

6. Verfahren nach Anspruch 1, **dadurch gekennzeichnet, dass** man das Nano-Composite zu Fasern verspinnt, zerschneidet und die Fasern mit Verstärkungsfasem einer Länge von 2 bis 15 cm mischt, das so entstandene Mischfaservlies gegebenenfalls nadelt und zum Halbzeug heiss verpresst.

7. Verfahren nach Anspruch 1, **dadurch gekennzeichnet, dass** man Nano-Composite-Granulat zu Pulver mahlt, dieses in Wasser dispergiert, die Dispersion mit Verstärkungsfasern einer Länge von 0,5 bis 15 cm vermischt, die Mischung trocknet und zum Halbzeug heiss verpresst.

8. Verfahren nach Anspruch 1, **dadurch gekennzeichnet, dass** die Verstärkungsfasern Glasfasern, Kohleristofffasern, Basaltfasem, Polyethylenterephthalatfasern oder Naturfasern sind.

9. Verfahren nach Anspruch 1, **dadurch gekennzeichnet, dass** der Thermoplast ein Polyolefin, ein Polyamid oder ein verhältnismässig niedrig schmelzender Polyester ist.

10. Verfahren nach Anspruch 1, **dadurch gekennzeichnet, dass** die Nanopartikel Plättchen aus Schichtsilikaten mit einer Partikelgrösse von 50 bis 1500 nm und einer Dicke von 0,5 bis 10 nm sind.

11. Verfahren nach Anspruch 10, **dadurch gekennzeichnet,dass** der Durchmesser der Plättchen kleiner ist als der Durchmesser der Verstärkungsfasern.

12. Verfahren nach Anspruch 10, **dadurch gekennzeichnet, dass** das Silikat Montmorillonit ist.

13. Faservertärktes, thermoplastisch verarbeitbares flächiges Halbzeug, enthaltend:
99 bis 80 Gewichtsteile eines thermoplastischen Kunststoffs,
1 bis 20 Gewichtsteile Nanopartikel und
20 bis 800 Gewichtsteile Verstärkungsfasern.

14. Verwendung des Halbzeugs nach Anspruch 13 zur Herstellung von Fertigteilen für die Automobilindustrie, die Möbelindustrie und das Bauwesen.
